# EUROPÄISCHE PATENTSCHRIFT

(11) **EP 1 103 207 B1**
(45) Veröffentlichungstag und Bekanntmachung des Hinweises auf die Patenterteilung: **18.02.2004**
(21) Anmeldenummer: 00125774.0
(22) Anmeldetag: 24.11.2000
(51) Int. Cl.: A47B 96/20, B32B 3/10, B27D 1/08, B27D 5/00, B27M 3/18, B27H 1/00, B27N 7/00

(54) **Möbelelement aus Holzmaterial, insbesondere für Wohnmobile, und Verfahren zu dessen Herstellung**
Furniture element comprised of wood material, particularly for caravans, and a method for its fabrication
Elément de meuble en bois, en particulier pour des caravanes, et son procédé de fabrication

(30) Priorität: 24.11.1999 DE 19956587
(43) Veröffentlichungstag der Anmeldung: 30.05.2001
(73) Patentinhaber: Dreer, Franz, D-86825 Bad Wörishofen (DE)
(72) Erfinder: Dreer, Franz, D-86825 Bad Wörishofen (DE)
(74) Vertreter: Fiener, Josef

(56) Entgegenhaltungen:
- EP-A- 0 545 390
- WO-A-98/23422
- DE-A- 19 910 718
- DE-C- 904 461

## Beschreibung

Die Erfindung betrifft ein Möbelelement.aus Holzmaterial, insbesondere für Wohnmobile und Wohnwagen, mit einer mittleren Trägerplatte und wenigstens einer darauf aufgebrachten Deckschicht, wobei in der Trägerplatte Längsschlitze bzw. Quernuten eingearbeitet sind, sowie ein Verfahren zu dessen Herstellung.

Derartige Möbelelemente aus Holzmaterial werden für die wohnliche Inneneinrichtung in Wohnmobilen und Wohnwagen in großer Anzahl benötigt, insbesondere für Möbeltüren. Dabei sollen diese Möbeltüren, insbesondere im Fahrzeugbereich, ein geringes Gewicht aufweisen, um so das Leergewicht zu reduzieren. Hierzu wird für die Möbelelemente häufig eine Rahmenbauweise mit eingelegten Leisten angewendet, die jedoch vom Montageaufwand her recht aufwendig ist. Ähnliches gilt für die alternative Ausführung mit Papierwaben als Mittelschicht. Diese Bauweisen eignen sich jedoch kaum für gewölbte Türen oder Möbelelemente, wie dies zunehmend aus ästhetischen Gründen oder zur Optimierung des Stauvolumens gerade in Wohnmobilen gefordert wird. Die vorstehend genannten Bauweisen mit Rahmen oder Papierwaben lassen sich nämlich kaum wölben, so daß die geforderte Bogen- oder S-Form von Möbelteilen und abgerundeten Kanten kaum oder nur mit sehr hohen Preßdrücken erzielbar ist. Bei der letzten Alternative besteht jedoch die Gefahr, daß das Trägermaterial oder die Deckschicht einreißt und somit die Stabilität oder das Aussehen des Möbelelementes herabgesetzt wird. Dem läßt sich häufig auch nicht durch die im Schreinerhandwerk bekannte Vorgehensweise begegnen, indem Längsschlitze in das Trägermaterial eingearbeitet werden.

Demzufolge liegt der Erfindung die Aufgabe zugrunde, ein Möbelelement aus Holzmaterial zu schaffen, das bei niedrigem Gewicht einfach herzustellen und im Kantenbereich optisch ansprechend gestaltet ist. Zudem soll ein entsprechendes Herstellungsverfahren angegeben werden.

Diese Aufgabe wird gelöst durch ein Möbelelement gemäß Anspruch 1 sowie ein Verfahren zur Herstellung gemäß Anspruch 10. Bevorzugte Ausführungsformen sind Gegenstand der Unteransprüche.

Durch die Ausbildung einer keilförmig auslaufenden Verjüngung der Deckschicht im Kantenbereich wird einer optimale Biegbarkeit der Deckschicht ohne Rißgefahr erreicht. Aufgrund der Einarbeitung von im wesentlichen quer zu den Längsschlitzen verlaufenden Quernuten, insbesondere in zusammenhängender Mäanderform, wird eine erhebliche Gewichtsreduzierung erreicht. Zudem wird durch die Quernuten die Splittergefahr des Trägermaterials wesentlich verringert sowie eine Erhöhung der Flexibilität erreicht, so daß auch dreidimensional gewölbte Möbelelemente herstellbar sind. Die Ausbildung einer Postforming-Kante wird dabei wesentlich vereinfacht, so daß ein sauberes optisches Aussehen des fertiggestellten Möbelelementes gewährleistet ist.

Mit dem vorgeschlagenen Herstellungsverfahren für ein derartiges Möbelelement wird eine besonders gute Anpassung an ein Unterwerkzeug erreicht, so daß ein einfacher, darübergestülpter Vakuumbeutel oder eine druckdichte Membran (z.B. eine einfache Folie aus Kunststoff) zur Herstellung der gewünschten zweidimensionalen oder gar dreidimensionalen Form ausreicht. Somit kann auf ein Gegenwerkzeug oder eine Oberform verzichtet werden. Hierdurch wird die Herstellung derartiger Möbelelemente wesentlich vereinfacht, da keine aufwendigen Oberwerkzeuge zur Aufbringung eines Preßdruckes benötigt werden.

Nachfolgend wird ein Ausführungsbeispiel des Möbelelementes und eines Herstellungsverfahrens anhand der Zeichnung näher erläutert und beschrieben. Hierbei zeigen:
- Fig. 1: eine Perspektivansicht auf eine Trägerplatte eines Möbelelementes;
- Fig. 2: einen Querschnitt durch ein schematisch dargestelltes Herstellungswerkzeug; und
- Fig. 3: eine vergrößerte Darstellung des Randbereiches gemäß Fig. 2.

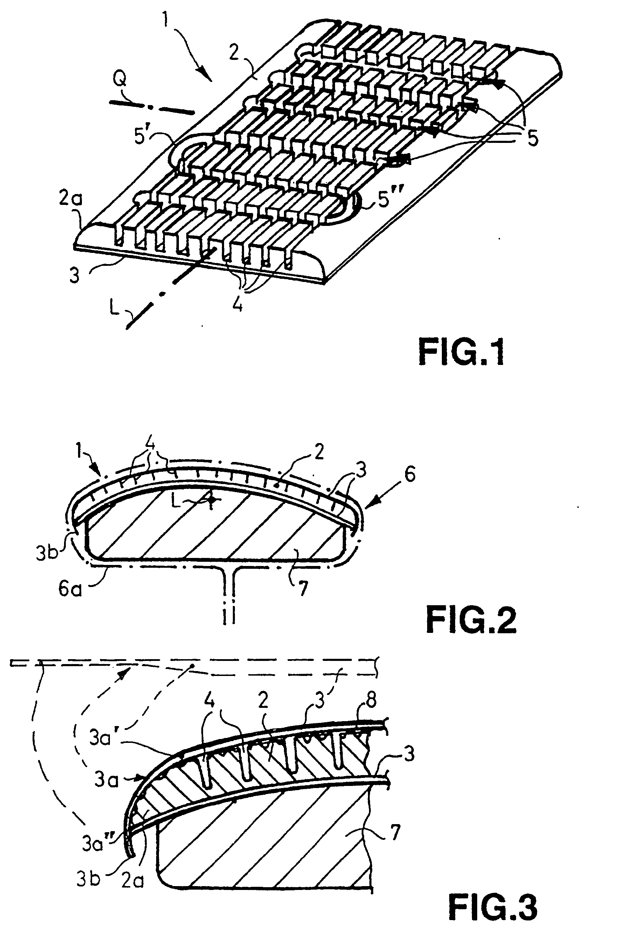

In Fig. 1 ist ein teilweise fertiggestelltes Möbelelement aus Holzmaterial dargestellt, das aus einer Trägerplatte 2 und wenigstens einer darauf aufgebrachten Deckschicht 3 besteht. Die Deckschicht 3 ist hier unten auf die Trägerplatte 2 aufgeleimt. Auch auf die Oberseite wird eine obere Deckschicht 3 aufgebracht, wie dies im Zusammenhang mit Fig. 2 und 3 näher beschrieben wird. Die obere Deckschicht 3 umgreift dabei die abgerundeten Längskanten 2a zur Ausbildung einer Postforming-Kante, so daß die obere Deckschicht 3 direkt an die untere Deckschicht 3 anschließt (vgl. Fig. 3), um somit allseitig ein ansprechendes Erscheinungsbild als Holzplatte zu gewährleisten. Die Trägerplatte 2 besteht dabei bevorzugt aus einer mehrschichtigen Tischlerplatte oder einer MDF-Platte bzw. einer ähnlichen Platte auf Holzbasis. Auch die Deckschichten 3 können aus einem Echtholz-Furnier bestehen, obwohl aus Kostengründen meist ein Schichtstoff oder Preßlaminat auf Papp-/Holzbasis (sog. Papierbeschichtung) bevorzugt wird.

In die hier obere Fläche der Trägerplatte 2, auf die später die obere Deckschicht 3 aufgeleimt bzw. aufgeklebt wird, wird bevorzugt als erster Arbeitsgang eine Vielzahl von Quernuten 5 eingebracht, die zumindest im wesentlichen rechtwinklig zu Längsschlitzen 4 verlaufen. Die Quernuten 5 werden bevorzugt mit einem Fingerfräser von oben her bis ca. 90 % der Plattendicke auf einem NC-Bearbeitungszentrum eingefräst. Dabei können auch die Kantenbereiche 2a zur Ausbildung der Postforming-Kante vorbearbeitet werden oder auch später noch von einem seitlich in die Trägerplatte 2 eingreifenden Scheibenfräser ausgearbeitet werden. Die Längsschlitze 4 können ebenfalls mit einem Fingerfräser oder einem Mehrfach-Fräswerkzeug in einem Arbeitsvorgang eingefräst werden, insbesondere bei einer Einzelteilfertigung. Bei einer Serienfertigung kann es jedoch kostengünstiger sein, die Längsschlitze 4 im Durchlaufverfahren einzusägen oder mit einem Mehrfach-Scheibenfräser in einem Arbeitsgang herzustellen.

Es sei darauf hingewiesen, daß bei der Einbringung der Quernuten 5 diese bevorzugt zusammenhängend in Art einer Mäanderform in die Trägerplatte 2 eingearbeitet werden. Die Verbindung zwischen den Quernuten 5 kann hierbei rechtwinklig erfolgen, obwohl der Übergang zwischen den Quernuten 5 in Form von Kreisbögen 5' bevorzugt wird, wie dies im vorderen Teil der Trägerplatte 2 dargestellt ist.

In Fig. 2 ist der Arbeitsschritt nach dem Einfräsen der Quernuten 5 und Einsägen der Längsschlitze 4 gezeigt. Hierzu wird die Trägerplatte 2 über ein konvex gewölbtes Unterwerkzeug 7 gelegt, was auch im Durchlaufverfahren erfolgen kann. Anschließend wird eine Vakuumvorrichtung 6 zum Einsatz gebracht, wobei diese in einfachster Form aus einem darübergestülpten, evakuierbaren Beutel 6a oder Kunststoff-Membran besteht. Nach Evakuieren dieses luftdichten Kunststoffbeutels, der hier in Strichpunktlinien angedeutet ist, wird die obere Deckschicht 3 zusammen mit der Trägerplatte 2 um die hier als Punkt dargestellte Längsachse L gewölbt, wobei zugleich der Kantenbereich der Deckschicht 3 (vgl. Fig. 3) exakt um den Kantenbereich 2a der Trägerplatte 2 gelegt wird. Wesentlich ist hierbei, daß die in Fig. 3 etwas vergrößert in Strichlinien dargestellte Deckschicht 3 im Kantenbereich 2a mit einer Verjüngung 3a auslaufend bzw. verdünnt (d.h. mit reduzierter Schichtstärke) ausgebildet ist, um diese exakt passend um die abgerundete Kante 2a herumlegen zu können. Hierdurch wird eine saubere Postforming-Kante ausgebildet, wie dies vergrößert in Fig. 3 dargestellt ist.

Aus der vergrößerten Darstellung in Fig. 3 ist ersichtlich, daß sich bei der Wölbung um das konvexe Werkzeug 7 die Längsschlitze 4 nach oben hin geringfügig aufweiten. Entsprechendes gilt bei der Verformung in einem konkaven Werkzeug, wobei dann die Trägerplatte 2 über Kopf eingelegt würde. Wesentlich ist hierbei, daß die hier obere Deckschicht 3 an der Kante mit einer Verjüngung 3a auslaufend ausgebildet ist, wobei diese einen im Querschnitt keilförmigen Übergang 3a' und eine sich daran anschließende, streifenförmige Schicht 3a" aufweist. Hierdurch wird die z.B. 1,5 mm dicke Deckschicht 3 auf etwa 0,4 mm Wandstärke im Bereich der Schicht 3a'' reduziert, so daß dieser Bereich mit geringem Kraftaufwand rißfrei um die Abrundung 2a herumgelegt werden kann. Diese Verjüngung 3a der Deckschicht 3 kann auch kontinuierlich verlaufend ausgebildet, beispielsweise durch konisches Abfräsen der Deckschicht 3 von einer Ausgangsdicke von 1,5 mm auf beispielsweise 0,2 mm im Endbereich, also an der Kante, an der die Verjüngung 3a an die untere Deckschicht 3 anschließt. Zur Vervollständigung dieser Postforming-Kante 2a wird dann der sehr dünne, geringfügig überstehende Bereich 3b mit der Dicke von nur noch ca. 0,2 bis 0,3 mm auf Stoß abgeschnitten oder abgeknickt, so daß sich eine exakte Kantenausbildung ergibt.

Obwohl hier nur die Wölbung um die Längsachse L dargestellt ist, kann das Unterwerkzeug 7 auch zur Wölbung um die Querachse Q (vgl. Fig. 1) verwendet werden. Die erforderliche Flexibilität des Trägermaterials 2 (im unverleimten bzw. unverklebten Zustand ohne die obere Deckschicht 3) wird dabei durch die Vielzahl der Quernuten 5 ermöglicht. Der Volumenanteil der Quernuten 5 beträgt vorzugsweise etwa 50 %, so daß zusammen mit den Längsschlitzen 4 vom Ausgangsvolumen der Trägerplatte 2 nur noch ein Holzvolumen in Form aufrecht stehender, kurzer Stege von ca. 20 % verbleibt. Entsprechend groß ist dann die Gewichtsreduzierung des fertiggestellten Möbelelementes 1, wobei die Stabilität des Möbelelementes 1 durch die Verklebung zwischen der oberen Deckschicht 3 und den aufrecht stehenden, verbleibenden "Zähnen" gewährleistet ist. Die Verleimung bzw. Verklebung zwischen der durchgehenden oberen Deckschicht 3 und den noch verbleibenden, aufrecht stehenden "Zähnen" ist mit dem Bezugszeichen 8 und in Form jeweils einer Wellenlinie angedeutet, ebenso die Verbindung im Kantenbereich 2a mit der Verjüngung 3a. Insgesamt ergibt sich somit ein sehr leichtes und dennoch stabiles Möbelelement aus Holzmaterial und exakter Kantenausbildung, das je nach Dichte der Längsschlitze und/oder Quernuten um relativ enge Radien entlang dem Werkzeug 7 gewölbt werden kann.

## Patentansprüche

1. Möbelelement aus Holzmaterial, insbesondere für Wohnmobile und Wohnwagen, mit einer mittleren Trägerplatte (2) und wenigstens einer darauf aufgebrachten Deckschicht (3), wobei in der Trägerplatte (2) Längsschlitze (4) bzw. Quernuten (5) eingearbeitet sind,
**dadurch gekennzeichnet, daß**
die Deckschicht (3) zur Ausbildung einer Postforming-Kante (2a) in deren abgerundeten Kantenbereich mit einer Verjüngung (3a) auslaufend ausgebildet ist.

2. Möbelelement nach Anspruch 1, **dadurch gekennzeichnet, daß** die Längsschlitze (4) und/oder Quernuten (5) in die Trägerplatte (2) eingesägt sind.

3. Möbelelement nach Anspruch 1, **dadurch gekennzeichnet, daß** daß die Längsschlitze (4) und/oder Quernuten (5) in die Trägerplatte (2) eingefräst sind.

4. Möbelelement nach einem der Ansprüche 1 bis 3, **dadurch gekennzeichnet, daß** die Quernuten (5) mäanderförmig zusammenhängend verlaufend ausgebildet sind.

5. Möbelelement nach Anspruch 4, **dadurch gekennzeichnet, daß** die Quernuten (5) im Randbereich der Trägerplatte (2) diese verbindende Kreisbögen (5') aufweisen.

6. Möbelelement nach einem der Ansprüche 1 bis 5, **dadurch gekennzeichnet, daß** die Trägerplatte (2) aus einer Span-/ Tischler-/Furnier- oder MDF-Platte besteht.

7. Möbelelement nach einem der Ansprüche 1 bis 6, **dadurch gekennzeichnet, daß** die Deckschicht (3) aus einem Schichtstoff oder Preßlaminat, vorzugsweise in einer Dicke von 1,5 mm, besteht.

8. Möbelelement nach einem der Ansprüche 1 bis 7, **dadurch gekennzeichnet, daß** die Verjüngung (3a) der Deckschicht (3) im Bereich der Postforming-Kante (2a) aus einem im Querschnitt keilförmigen Übergang (3a') und einer streifenförmig verdünnten Schicht (3a") mit etwa 1/4 der Schichtstärke der Deckschicht (3) besteht.

9. Möbelelement nach Anspruch 8, **dadurch gekennzeichnet, daß** die Verjüngung (3a) der Deckschicht (3) kontinuierlich auslaufend ausgebildet ist.

10. Verfahren zur Herstellung eines Möbelelementes nach einem der vorstehenden Ansprüche,
**dadurch gekennzeichnet, daß**
die Trägerplatte (2) zusammen mit wenigstens einer Deckschicht (3), vorzugsweise in einer Vakuumvorrichtung (6) um die Längsachse (L) und/oder die Querachse (Q) gewölbt wird, wobei die Verjüngung (3a) um eine abgerundete Kante (2a) der Trägerplatte (2) angelegt wird.

11. Verfahren nach Anspruch 10, **dadurch gekennzeichnet, daß** der Wölbevorgang über einem konkav und/oder konvex gewölbten Unterwerkzeug (7) in einem evakuierbaren Beutel (6a) oder einer Membran einer Vakuumvorrichtung (6) oder Formpresse erfolgt.

## Claims

1. A furniture element comprised of wood material, particularly for campers and caravans, including a center bearer plate (2) and at least one surface layer (3) coated thereon, the bearer plate (2) having elongated slots (4) or transverse slots (5), respectively, forced therein,
**characterized in that**
the surface layer (3) is formed to end in a tapering (3a) to provide a postforming edge (2a) in the rounded edge zone thereof.

2. The furniture element of claim 1, **characterized in that** the elongated slots (4) and/or transverse slots (5) are sawn into the bearer plate (2).

3. The furniture element of claim 1, **characterized in that** the elongated slots (4) and/or transverse slots (5) are milled into the bearer plate (2).

4. The furniture element of any of claims 1 to 3, **characterized in that** the transverse slots (5) are formed so as to take a meander-shaped continuous course.

5. The furniture element of claim 4, **characterized in that** the transverse slots (5) include arcs of circle (5') to connect them at the rim area of the bearer plate (2).

6. The furniture element of any of claims 1 to 5, **characterized in that** the bearer plate (2) is made of a chipboard, a plywood board, a veneer sheet, or a fiberboard of medium density (MDF board).

7. The furniture element of any of claims 1 to 6, **characterized in that** the surface layer (3) is composed of a laminated material or pressed laminate, preferably in a thickness of 1.5 mm.

8. The furniture element of any of claims 1 to 7, **characterized in that** the tapering (3a) of the surface layer (3) in the area of the postforming edge (2a) is formed by a transition (3a') of wedge section and a lamellarly thinned layer (3") of approximately ¼ of the layer diameter of said surface layer (3).

9. The furniture element of claim 8, **characterized in that** the tapering (3a) of the surface layer (3) is formed to continuously taper off.

10. A method for fabricating a furniture element according to any of the preceding claims,
**characterized in that**
the bearer plate (2), together with at least one surface layer (3), is arched around the longitudinal axis (L) and/or the transverse axis (Q) preferably in a vacuum device (6), the tapering (3a) being set around a rounded edge (2a) of said bearer plate (2).

11. The method of claim 10, **characterized in that** the arching operation is carried out by means of a concavely and/or convexly arched support tool (7) in an evacuatable bag (6a) or a membrane of a vacum device (6) or molding press machine.

## Revendications

1. Elément de meuble fabriqué avec un matériel en bois, en particulier pour les camping-cars et les caravanes, comportant une plaque de support (2) intermédiaire et au moins une couche de revêtement (3) appliquée sur celle-ci, des fentes longitudinales (4) ou des rainures transversales (5) étant ménagées dans la plaque de support (2),
**caractérisé en ce que**,
la couche de revêtement (3) est formée avec un rétrécissement (3a) terminal au niveau de la zone arrondie de ses arêtes pour la formation d'une arête postformable (2a).

2. Elément de meuble selon la revendication 1, **caractérisé en ce que** les fentes longitudinales (4) et/ou les rainures transversales (5) ont été sciées dans la plaque de support (2).

3. Elément de meuble selon la revendication 1, **caractérisé en ce que** les fentes longitudinales (4) et/ou les rainures transversales (5) ont été fraisées dans la plaque de support (2).

4. Elément de meuble selon une des revendications 1 à 3, **caractérisé en ce que** les rainures transversales (5) sont réalisées avec une configuration en forme de méandres reliées les unes aux autres.

5. Elément de meuble selon la revendication 4, **caractérisé en ce que** les rainures transversales (5) présentent, dans la zone de bord de la plaque de support (2), des arcs circulaires (5') qui relient lesdites rainures transversales.

6. Elément de meuble selon une des revendications 1 à 5, **caractérisé en ce que** la plaque de support (2) consiste en un panneau de bois en particules, d'un panneau de menuiserie, d'un panneau de placage, ou bien de plafonds en bois ou de dérivés de bois.

7. Elément de meuble selon une des revendications 1 à 6, **caractérisé en ce que** la couche de revêtement (3) consiste en un matériau stratifié ou laminé à pression, de préférence d'une épaisseur de 1,5 mm.

8. Elément de meuble selon une des revendications 1 à 7, **caractérisé en ce que** le rétrécissement (3a) de la couche protectrice (3) dans la zone de l'arête (2a) de postformage consiste en une partie de transition cunéiforme en section transversale (3a') et d'une couche en forme de bande amincie (3a") d'environ 1/4 de l'épaisseur de la couche de revêtement (3).

9. Elément de meuble selon la revendication 8, **caractérisé en ce que** le rétrécissement (3a) de la couche de revêtement (3) est formée pour se terminer de façon continue.

10. Procédé de fabrication d'un élément de meuble, selon l'une des revendications précédentes,
**caractérisé en ce que**
la plaque de support (2), ensemble avec au moins une couche de revêtement (3), est courbée autour de l'axe longitudinal (L) et/ou de l'axe transversal (Q), de préférence dans un dispositif à vide (6), le rétrécissement (3a) étant appliqué autour d'une arête arrondie (2a) de la plaque de support (2).

11. Procédé selon la revendication 10, **caractérisé en ce que** le processus de courbure se réalise moyennant un outil inférieur courbé (7), concave et/ou convexe, dans une poche pouvant être soumise au vide (6a) ou une membrane d'un dispositif à vide (6) ou d'une presse de moulage.
